# EUROPEAN PATENT APPLICATION

(11) **EP 4 810 423 A1**
(43) Date of publication of application: **23.09.2026**
(21) Application number: 26161563.7
(22) Date of filing: 02.03.2026
(51) Int. Cl.: B65H 5/38, B65H 5/06

(54) **DOCUMENT CONVEYING DEVICE**

(30) Priority: 17.03.2025 JP 2025042150
(71) Applicant: KYOCERA Document Solutions Inc., Osaka-shi, Osaka 540-8585 (JP)
(72) Inventor: ISODA, Ren, Osaka-shi, Osaka, 540-8585 (JP); OGAWA, Shikitaro, Osaka-shi, Osaka, 540-8585 (JP)
(74) Representative: Becker Kurig & Partner Patentanwälte mbB

(57) **Abstract**

A document conveying device (120) comprises a pair of conveying guides (61G), a reading section (61R), a pair of first conveying rollers (64), a pair of second conveying rollers (65), and a first contact member (91). The conveying guides face to both surfaces of a document (G) conveyed in a predetermined conveyance direction (Z). The reading section is provided on the one conveying guide for reading an image from the document. The first conveying rollers is provided at an upstream side of the reading section in the conveyance direction for holding and conveying the document. The second conveying rollers is provided at a downstream side of the reading section in the conveyance direction for holding and conveying the document. The first contact member is provided on the other conveying guide between the reading section and the second conveying rollers and have a distal end part protruding toward the one conveying guide in contact with the document.

## Description

### BACKGROUND

The present disclosure relates to a document conveying device.

A document conveying device for conveying a document via a reading position of an image reading device is known. For example, a conventional document conveying device includes a document feed tray on which documents are stacked, an ejection tray on which the document is ejected, a conveying path from the document feed tray to the ejection tray via a reading position, and a pickup roller for picking up the document from the document feed tray to the conveying path.

In the above-described document conveying device, pairs of conveying rollers are provided on an upstream side and a downstream side of the reading position. Although deflection occurs for the document between the two pairs of conveying rollers, behavior of the document is stabilized while the document is held between the two pairs of conveying rollers. However, the deflection of the document is released at the moment when a rear end of the document passes through the pair of conveying rollers on the upstream side, and the behavior of the document becomes unstable. Therefore, image read by a reading section may be disturbed.

### SUMMARY

A document conveying device in accordance with the present disclosure comprises a pair of conveying guides, a reading section, a pair of first conveying rollers, a pair of second conveying rollers, and a first contact member. The pair of conveying guides face to both surfaces of a document conveyed in a predetermined conveyance direction. The reading section is provided on one of the conveying guides for reading an image from the document. The pair of first conveying rollers is provided at an upstream side of the reading section in the conveyance direction for holding and conveying the document. The pair of second conveying rollers is provided at a downstream side of the reading section in the conveyance direction for holding and conveying the document. The first contact member is provided on the other of the conveying guides between the reading section and the pair of second conveying rollers and have a distal end part protruding toward the one of the conveying guides in contact with the document.

### BRIEF DESCRIPTION OF THE DRAWINGS

FIG. 1 is a front view schematically showing internal structure of an image forming apparatus according to an embodiment of the present disclosure.
FIG. 2 is a perspective view showing a document conveying device according to the embodiment of the present disclosure.
FIG. 3 is a perspective view showing the document conveying device, in a state a conveying guide at a lower side is exposed, according to the embodiment of the present disclosure.
FIG. 4 is a plan view showing the document conveying device, in the state the conveying guide at the lower side is exposed, according to the embodiment of the present disclosure.
FIG. 5 is a front view showing internal structure of the document conveying device according to the embodiment of the present disclosure.
FIG. 6 is a front view showing a document feed tray lifting mechanism of the document conveying device according to the embodiment of the present disclosure.
FIG. 7 is a front view showing a document feeding mechanism and a first conveying path of the document conveying device according to the embodiment of the present disclosure.
FIG. 8 is a front view showing the first conveying path of the document conveying device according to the embodiment of the present disclosure.
FIG. 9 is a schematic diagram showing action of the document conveying device according to the embodiment of the present disclosure.
FIG. 10 is a schematic diagram showing the action of the document conveying device according to the embodiment of the present disclosure.
FIG. 11 is a schematic diagram showing the action of the document conveying device according to the embodiment of the present disclosure.
FIG. 12 is a schematic diagram showing the action of the document conveying device according to the embodiment of the present disclosure.
FIG. 13 is a schematic diagram showing action of a conventional document conveying device.
FIG. 14 is a schematic diagram showing action of the conventional document conveying device.
FIG. 15 is a schematic diagram showing action of the conventional document conveying device.
FIG. 16 is a schematic diagram showing action of the conventional document conveying device.
FIG. 17 is a schematic diagram showing action of the conventional document conveying device.
FIG. 18 is a front view showing the first conveying path of the document conveying device according to a modified example of the embodiment of the present disclosure.

### DETAILED DESCRIPTION

In the following, a document conveying device 120 and an image forming apparatus 100 according to an embodiment of the present disclosure will now be described with reference to the accompanying drawings.

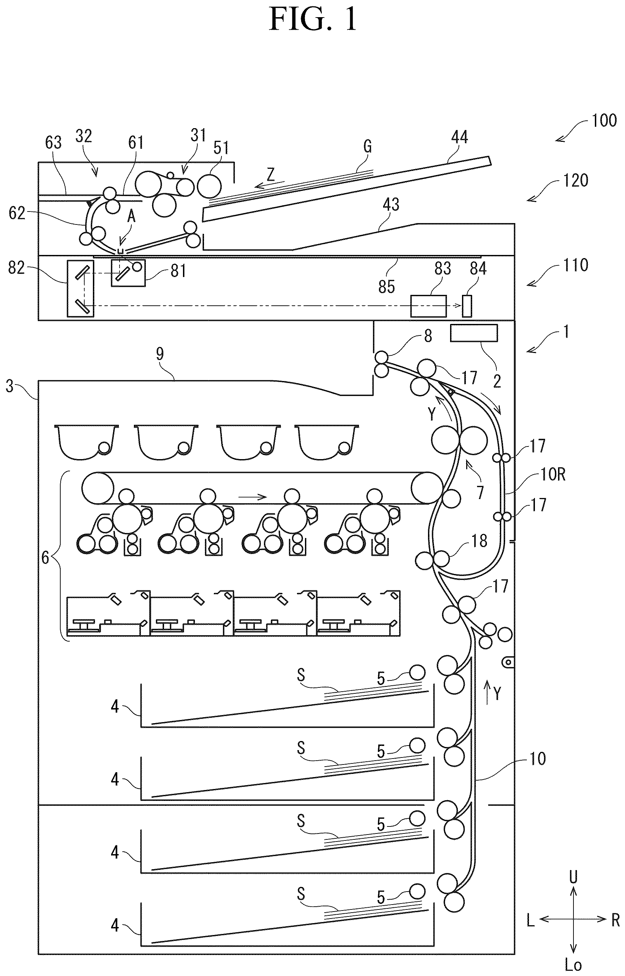

FIG. 1 is a front view schematically showing internal structure of the image forming apparatus 100. In each drawing, U, Lo, L, R, Fr and Rr indicate an upper side, a lower side, a left side, a right side, a front side and a rear side, respectively. Incidentally, such directions are only defined for convenience of explanation.

The image forming apparatus 100 comprises a printing device 1, a document reading device 110, and a document conveying device 120. Above the printing device 1, the document reading device 110 is provided, and, above the document reading device 110, the document conveying device 120 is provided. The document conveying device 120 conveys a document G via a reading position A of the document reading device 110. The document reading device 110 is a flatbed type image scanner and reads the document G to generate image data. The printing device 1 forms an image based on the image data on a sheet S. Although the present embodiment shows an example in which the printing device 1 forms the image by an electrophotographic system, the printing device 1 may be configured to form the image by another system (For example, an inkjet system).

The printing device 1 includes a rectangular parallelepiped main body housing 3. At a lower portion of the inside of the main body housing 3, a sheet feed cartridge 4 in which the sheet S is stacked and a sheet feeding roller 5 for feeding the sheet S rightward from the sheet feeding cartridge 4 are provided. Above the sheet feed cartridge 4, an image forming device 6 for forming a toner image by an electrophotographic system is provided, and, at a right upper side of the image forming device 6, a fixing device 7 for fixing the toner image to the sheet S is provided. Above the fixing device 7, an ejecting roller 8 for ejecting the sheet S on which the toner image is fixed and an ejection tray 9 on which the ejected sheet S is stacked are provided.

Inside the main body housing 3, a conveying path 10 is provided from the sheet feeding roller 5 through the image forming device 6 and the fixing device 7 to the ejecting roller 8. In the conveying path 10, conveying rollers 17 for holding and conveying the sheet S are provided at a plurality of locations in a conveyance direction Y. At an upstream side of the image forming device 6 in the conveyance direction Y, a register roller 18 is provided. At the right side of the fixing device 7, an inverted conveying path 10R is provided which branches from the conveying path 10 at a downstream side of the fixing device 7 in the conveyance direction Y and rejoins the conveying path 10 at an upstream side of the register roller 18 in the conveyance direction Y.

The control unit 2 includes an arithmetic unit and a storage unit (not shown). The arithmetic unit is, for example, a CPU (Central Processing Unit). The storage unit includes a storage medium, such as ROM (Read Only Memory), RAM (Random Access Memory), and EEPROM (Electrically Erasable Programmable Read Only Memory). The arithmetic unit executes various processes by reading and executing control program stored in the storage unit. The control unit 2 may be realized only by an integrated circuit without using software.

In front of the document reading device 110, a display operation unit (not shown) is provided. The display operation unit includes a display panel, a touch panel provided superposed on a display surface of the display panel, and a keypad adjacent to the display panel (not shown). The control unit 2 causes the display panel to display a screen representing an operation menu, status, and the like of the image forming apparatus 100, and controls each component of the image forming apparatus 100 according to operation detected by the touch panel and the keypad.

A basic image forming action of the printing device 1 is as follows. When a print job of single-sided printing is inputted to the printing device 1 from a display operation unit or an external computer, the sheet feeding roller 5 feeds the sheet S from the sheet feed cartridge 4 to the conveying path 10, the register roller 18 whose rotation is stopped corrects skew of the sheet S, and the register roller 18 feeds the sheet S to the image forming device 6 at a predetermined timing. An image forming device 6 forms the toner image on the sheet S by an electrophotographic system. Subsequently, the fixing device 7 fuses the toner image while holding and conveying the sheet S to fix the toner image to the sheet S, and the ejecting roller 8 ejects the sheet S to the ejection tray 9. In a case of double-sided printing, the sheet S having the toner image fixed on a first surface is fed to the conveying path 10 via the inverted conveying path 10R, whereby the toner image is transferred to a second surface.

### <Document Reading Device>

The document reading device 110 includes a first carriage 81 having a light source and a reflecting mirror, a second carriage 82 having two reflecting mirrors, a lens 83 for forming an image of light, an imaging element 84 for converting the formed light into image data, and a contact glass 85 on which the document G is placed.

A basic document reading action of the document reading device 110 is as follows. When a user places the document G on an upper surface of the contact glass 85 and gives a reading instruction to the document reading device 110, the second carriage 82 moves rightward at a speed V/2 in conjunction with the rightward movement of the first carriage 81 at a speed V. Meanwhile, the light source irradiates the document G with light, and the reflected light reflected by the document G is reflected by the reflecting mirror of the first carriage 81 and the reflecting mirrors of the second carriage 82, guided to the lens 83, formed on the image element 84, and converted into an image signal. The image signal is output to the control unit 2 of the printing device 1 and converted into image data.

### <Document Conveying Device>

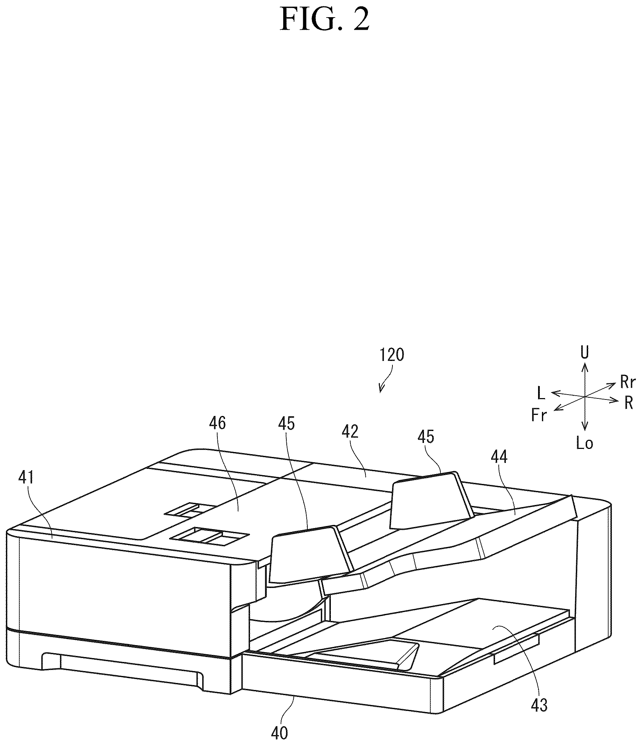

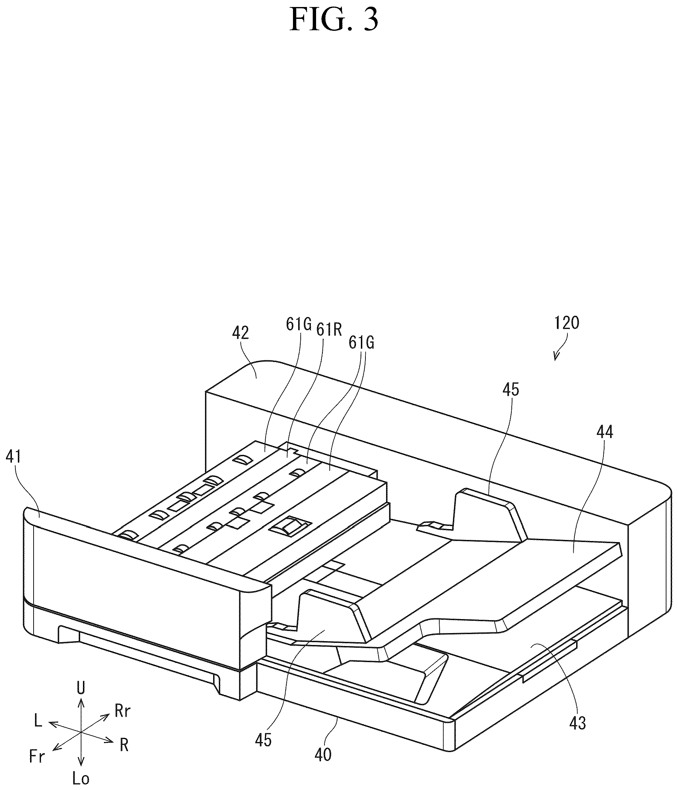

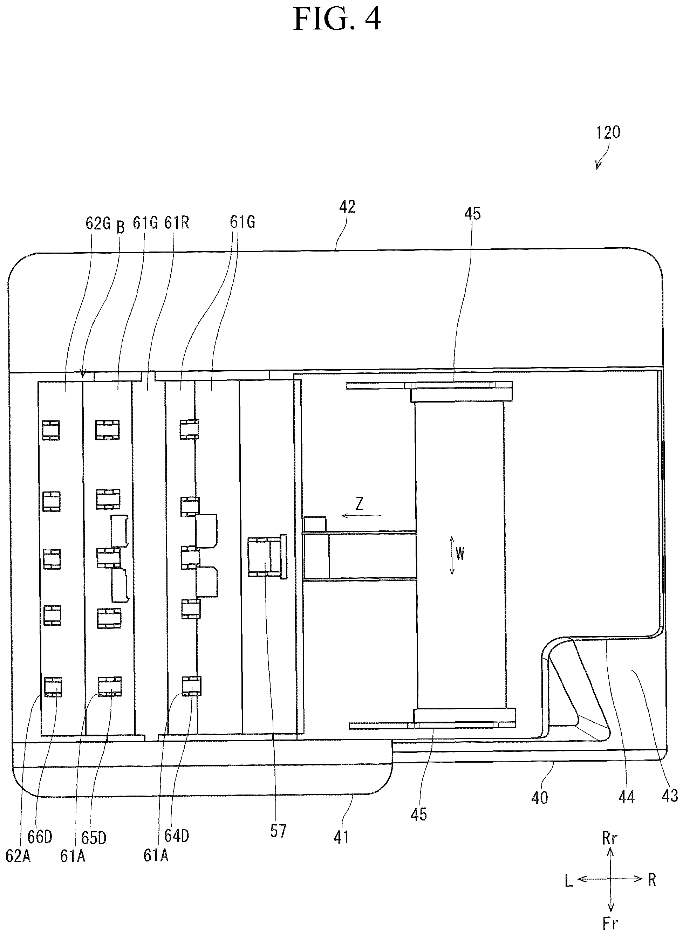

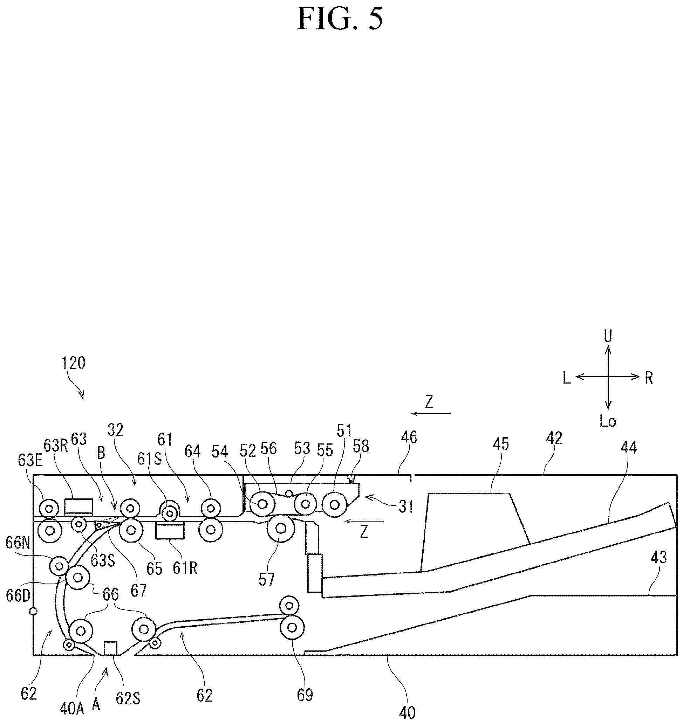

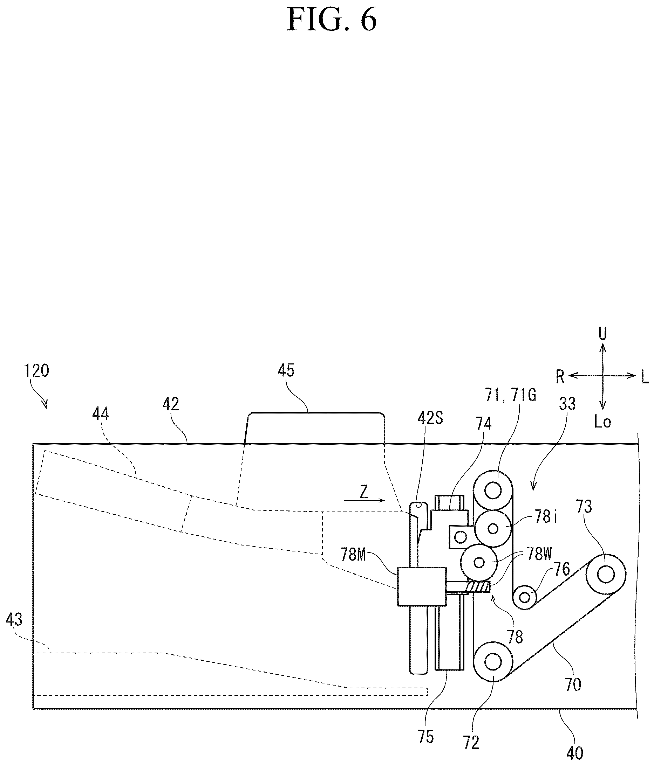

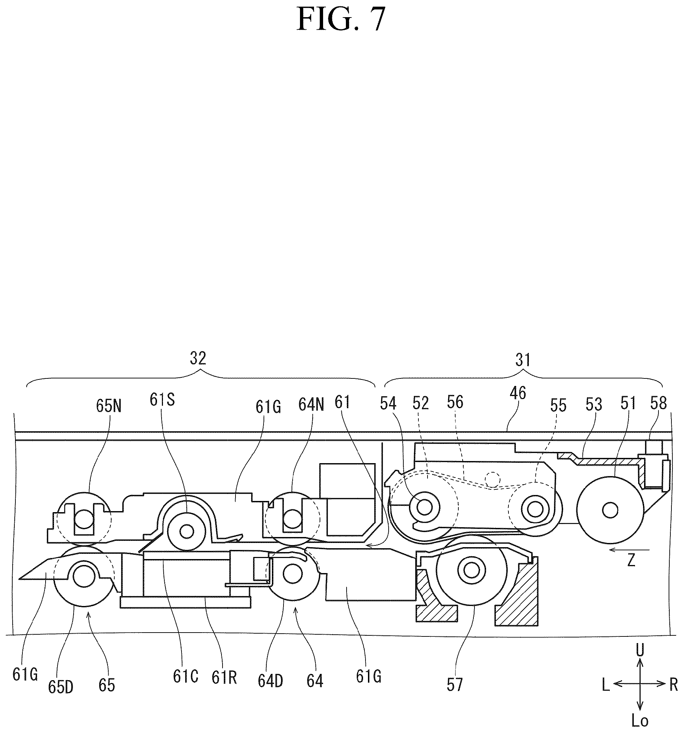

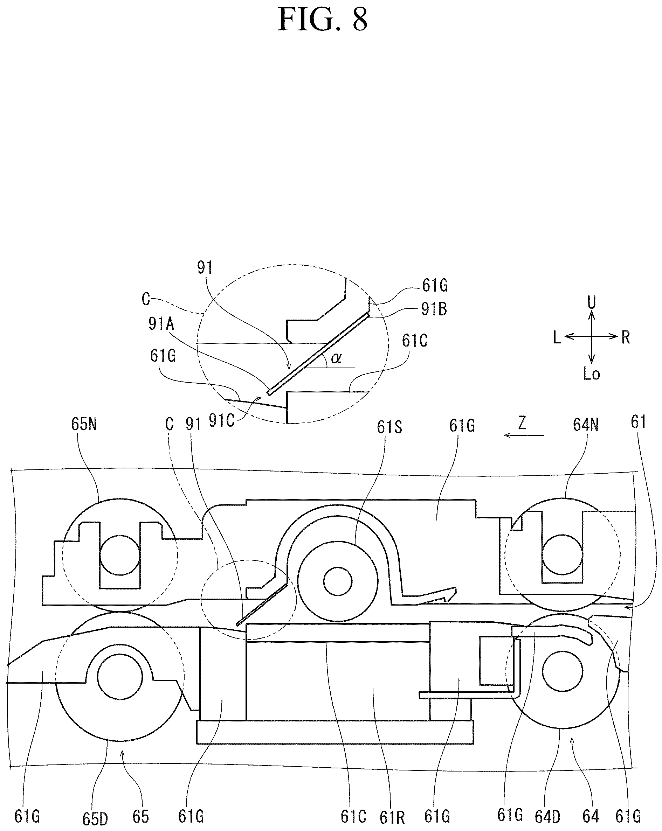

FIG. 2 is a perspective view showing the document conveying device 120. FIG. 3 is a perspective view showing the document conveying device 120, in a state a conveying guide 61G at a lower side is exposed. FIG. 4 is a plan view showing the document conveying device 120, in the state the conveying guide 61G at the lower side is exposed. FIG. 5 is a front view showing internal structure of the document conveying device 120. FIG. 6 is a front view showing a document feed tray lifting mechanism 33 of the document conveying device 120. FIG. 7 is a front view showing a document feeding mechanism 31 and a first conveying path 61 of the document conveying device 120. FIG. 8 is a front view showing the first conveying path 61 of the document conveying device 120.

The document conveying device 120 (see FIGs. 2 to 5) has a bottom portion 40, a first wall portion 41, and a second wall portion 42. The bottom portion 40 is formed in a flat shape and is generally rectangular. The first wall portion 41 and the second wall portion 42 face to each other in front and rear directions (a width direction W intersecting the conveyance direction Z of the document G). A rear edge part of the bottom portion 40 is hinge-connected to a rear part of the contact glass 85 (see FIG. 1) of the document reading device 110. The bottom portion 40 also has a function of pressing the document G on the contact glass 85. The first wall portion 41 extends from a left end part to a center part of a front edge part of the bottom portion 40. The second wall portion 42 is provided over an entire area of the rear edge part of the bottom portion 40. The cover portion 46 covers an upper part and a left part of a space between the first wall portion 41 and the second wall portion 42. A left lower end part of the cover portion 46 is hinge-connected to the left end part of the bottom portion 40.

An opening 40A (see FIG. 5) is a slit formed in a region of the bottom portion 40 facing to the first carriage 81 (see FIG. 1) located at a home position, and a longitudinal direction thereof is the front and rear directions. The opening 40 A is an example of the reading position A at which the document reading device 110 reads the document G.

### <Document Feed Tray >

The document feed tray 44 (see FIGs. 2 to 6) is provided on the right side of a center of the document conveying device 120 in left and right directions and on the front side of the second wall portion 42. The document feed tray 44 is inclined so as to be lower on the left side. On an upper surface of the document feed tray 44, a pair of cursors 45 for aligning front and rear ends of the document G are provided. The pair of cursors 45 interlock with each other in an opposite direction and slide equidistantly, for example, by a rack and pinion mechanism (not shown). The pair of cursors 45 are positioned so as to always maintain the same distance from a center of a stacking surface of the document feed tray 44 in the front and rear directions. Therefore, by bringing the pair of cursors 45 into contact with ends of the document G in the front and rear directions, the center of the document G in the front and rear directions coincides with the center of the document feed tray 44 in the front and rear directions.

### <Ejection Tray>

The ejection tray 43 is provided below the document feed tray 44. The ejection tray 43 is provided on an upper surface of the bottom portion 40.

### <Document Feeding Mechanism >

The document feeding mechanism 31 (See FIGs. 5 and 7) is provided in the space between the first wall portion 41 and the second wall portion 42. The document feeding mechanism 31 is provided with a box-shaped holder 53 whose lower part is opened. Inside the holder 53, a pickup roller 51, a driven roller 55, a driving roller 52, and a retard roller 57 are arranged in an axial direction as the front and rear directions. The driven roller 55 is provided to the left side of the pickup roller 51. The driving roller 52 is provided to the left side of the driven roller 55. An endless belt 56 is wound around the driving roller 52 and the driven roller 55. The retard roller 57 is pressed against an outer surface of the lower part of the endless belt 56.

Both front and rear ends of a drive shaft 54 of the driving roller 52 are supported by the first wall portion 41 and the second wall portion 42, and are connected to a drive section (not shown) including a motor and a reduction gear. The holder 53 is supported by the drive shaft 54 and is swingable around the drive shaft 54. Driving force is transmitted from the drive shaft 54 to the pickup roller 51 and the retard roller 57 through a transmission mechanism (not shown) such as a gear train and an endless belt.

A sensor 58 is a transmission type or reflection type optical sensor and is provided on an inner surface of the cover portion 46. The sensor 58 outputs a detection signal having a different level to the control part 2 when the holder 53 blocks light of the sensor 58 and when it does not.

### <Document Feed Tray Lifting Mechanism>

The document feed tray lifting mechanism 33 (see FIG. 6) is provided on the second wall portion 42. A driving pulley 71 is provided at an upper part of a center part of the second wall portion 42 in the left and right directions. A driven pulley 72 is provided below the driving pulley 71. A driven pulley 73 is provided at the lower left side of the driving pulley 71 and at the upper left side of the driven pulley 72. A guide pulley 76 is provided at the upper left side of the driven pulley 72 and at the right side of the driven pulley 73. An endless belt 70 is wound around the driving pulley 71, the driven pulleys 72 and 73 and the guide pulley 76. The driving section 78 includes a motor 78M, a worm gear 78 W, an idler gear 78i, and a driving gear 71G. The driving gear 71G is provided on a shaft common to the driving pulley 71.

A sliding portion 74 is provided on a left end of a rear edge of the document feed tray 44. The second wall portion 42 is provided with a slit 42 S whose longitudinal direction is upper and lower directions. The slit 42 S is provided at a position corresponding to a left end part of the rear edge part of the document feed tray 44. The sliding portion 74 penetrates the slit 42 S and is connected to a portion of the endless belt 70 between the driving pulley 71 and the driven pulley 72. The second wall portion 42 is provided with a lifting guide section 75. The lifting guide section 75 is a rail-like member whose longitudinal direction is the upper and lower directions. The sliding portion 74 is slidable in the upper and lower directions along the lifting guide section 75.

A basic action of the document feed tray lifting mechanism 33 is as follows. The driving force generated by the motor 78M is transmitted to the driving gear 71G via the worm gear 78 W and the idler gear 78i. By rotating the driving pulley 71 together with the driving gear 71G, the endless belt 70 is rotated, and the driven pulleys 72 and 73 are rotated accordingly. Since the document feed tray 44 is connected to the endless belt 70 through the sliding portion 74, the forward and reverse rotations of the motor 78M cause the document feed tray 44 to rise and fall.

The control unit 2 controls the document feed tray lifting mechanism 33 so as to lift the document feed tray 44 as an amount of the document G stacked on the document feed tray 44 decreases. When the upper surface of the document G stacked on the document feed tray 44 is pressed against the pickup roller 51, the holder 53 swings upward. When the holder 53 is swung upward by a predetermined amount, the holder 53 blocks the light of the sensor 58. The control unit 2 stops the rise of the document feed tray 44 when the light of the sensor 58 is blocked. At this time, an appropriate load acts between the upper surface of the document G and the pickup roller 51, and the document G can be picked up by the pickup roller 51.

### <Conveying Mechanism>

A conveying mechanism 32 (see FIG. 5) includes the first conveying path 61, a second conveying path 62, and a third conveying path 63. The first conveying path 61 is provided substantially horizontally to the left side of a contact region between the retard roller 57 and the endless belt 56. The second conveying path 62 and the third conveying path 63 branch from a branch point B at a left end part of the first conveying path 61. The second conveying path 62 is curved downward from the branch point B (at a side of the document reading device 110), passes through the reading position A, and is provided toward the right side from the reading position A (at a side of the ejection tray 43). The third conveying path 63 is provided substantially horizontally toward the left side from the branch point B.

The first conveying path 61 includes a pair of conveying guides 61G facing to both surfaces of the document G conveyed in a predetermined conveyance direction Z (See FIGs 4, 7 and 8). The pair of conveying guides 61G face to each other in the upper and lower directions. In FIGs. 3 and 4, only the lower conveying guide 61G is shown. One of the conveying guides 61G (in this embodiment, the lower conveying guide 61G) of the pair of conveying guides 61G is provided with a reading section 61R. The reading section 61R is, for example, a CIS (Contact Image Sensor), and is arranged so that a longitudinal direction thereof is the front and rear directions. The reading section 61R includes a contact glass 61C in contact with the document G. The other conveying guide 61G (in this embodiment, the upper conveying guide 61G) is provided with a shading correction roller 61S. The shading correction roller 61S is white, which is a reference color for shading correction of the reading section 61R, and is in contact with the contact glass 61C.

At a boundary between the contact glass 61C and the conveying guide 61G at the downstream side in the conveyance Z, an upper surface of the conveying guide 61G is slightly lower than an upper surface of the contact glass 61C. In other words, an end of a contact surface of the contact glass 61C at the downstream side in the conveyance direction Z protrudes toward the other conveying guide 61G from the one conveying guide 61G. This is because if the end of the contact surface of the contact glass 61C at the downstream side in the conveyance direction Z is at the same height as the conveying guide 61G, a distal end part of the document G may be caught in the minute gap between the contact glass 61C and the conveying guide 61G.

A pair of first conveying rollers 64 are provided at the upstream side of the reading section 61R in the conveyance direction Z to hold and convey the document G. The pair of first conveying rollers 64 have a driving roller 64D driven by a motor or the like (not shown) and a driven roller 64N pressed by the driving roller 64D. The driving roller 64D is exposed from an opening 61A provided in the lower conveying guide 61G. In this embodiment, the driving roller 64D is located below the first conveying path 61 and the driven roller 64N is located above the first conveying path 61, but the arrangement may be reversed.

The pair of first conveying rollers 64 are, for example, a pair of register rollers. A posture of the document G is corrected when the document G is abutted against the first conveying roller pair 64 which has stopped rotating, and then, the pair of first conveying rollers 64 rotate to convey the document G to the reading section 61R.

The pair of second conveyance rollers 65 are provided at the downstream side of the reading section 61R in the conveyance direction Z, and hold and convey the document G. The pair of second conveyance rollers 65 have a driving roller 65D driven by a motor or the like (not shown) and a driven roller 65N pressed by the driving roller 65D. The driving roller 65D is exposed from an opening 61B provided in the lower conveying guide 61G. In this embodiment, the driving roller 65D is located below the first conveying path 61 and the driven roller 65N is located above the first conveying path 61, but the arrangement may be reversed.

The second conveying path 62 includes a pair of conveying guides 62G facing to both surfaces of the document G conveyed (see FIG. 4). In FIG. 4, only the conveying guide 62G at the lower side of a portion curved downward from the branch point B of the second conveying path 62 is shown. At a plurality of locations of the second conveying path 62, pairs of conveying rollers 66 are provided (see FIG. 5). The pairs of conveying rollers 66 have a driving roller 66D driven by a motor or the like (not shown) and a driven roller 66N pressed by the driving roller 66D. The driving roller 66D is exposed from an opening 62A provided in the lower conveying guide 62G. The second conveying path 62 is provided with a shading correction plate 62S facing to the opening 40A. A pair of ejection rollers 69 is provided at an end of the second conveying path 62 at a side of the ejection tray 43. When the second conveying path 62 is used, both sides of the document G can be read in one time of conveyance by using the reading section 61R and the document reading device 110.

The third conveying path 63 is provided with a reading section 63R and a shading correction roller 63S. The arrangement of the reading section 63R and the shading correction roller 63S is vertically opposite to the arrangement of the reading section 61R and the shading correction roller 61S of the first conveying path 61. At a left end part of the third conveying path 63, a pair of ejection rollers 63E are provided. The left end part of the third conveying path 63 penetrates a left side surface of the cover portion 46. When the third conveying path 63 is used, both sides of the document G can be read in one time of conveyance by using the reading section 61R and the reading section 63R.

At the branch point B, a switching section 67 is provided. The switching section 67 has a plate-shaped member swinging about an axis having an axial direction as the front and rear directions, and guides the document G conveyed from the first conveying path 61 to either the second conveying path 62 or the third conveying path 63. The second conveying path 62 and the third conveying path 63 are selectively used depending on the type of the document G. For example, the third conveying path 63 may be used in a case of the document G using general copy paper, but when the amount of the document G is large even if it is general copy paper, the second conveying path 62 in which the document G is ejected to the large-capacity ejection tray 43 is preferable. On the other hand, the third conveying path 63, which is linearly continuous with the first conveying path 61, is suitable for the document G made of cardboard or resin and having a bending rigidity so large that it cannot pass through the second conveying path 62.

### <First Contact Member>

The first conveying path 61 is provided with a first contact member 91 (see FIG. 8). The first contact member 91 is provided on the other conveying guide 61G (in this embodiment, the upper conveying guide 61G) between the reading section 61R and the pair of second conveying rollers 65, and a distal end part 91A protruding toward a side of the one conveying guide 61G (in this embodiment, the lower conveying guide 61G) contacts the document G.

The first contact member 91 is a film made of a resin such as polyester. For example, a thickness of the first contact member 91 is 0.075 mm to 0.25 mm, and a width in the front and rear directions is 100 mm to 310 mm.

The first contact member 91 is inclined so that the distal end part 91A is positioned at the downstream side from a proximal end part 91B in the conveyance direction Z. In other words, the distal end part 91A is positioned at the lower left side with respect to the proximal end part 91B. The proximal end part 91B is an end, that is joined to the upper conveying guide 61G, of both ends of the first contact member 91. As an example, an inclined angle α of the first contact member 91 with respect to the horizontal is approximately 40 degrees.

The distal end part 91A of the first contact member 91 is located further downstream in the conveyance direction Z than an end of the contact surface (the upper surface) of the contact glass 61C at the downstream side in the conveyance direction Z, and further toward one conveying guide 61G than the contact surface of the contact glass 61C. Between the distal end part 91A and the one conveying guides 61G, a gap 91C is provided.

### <Action of Conventional Document Conveying Device>

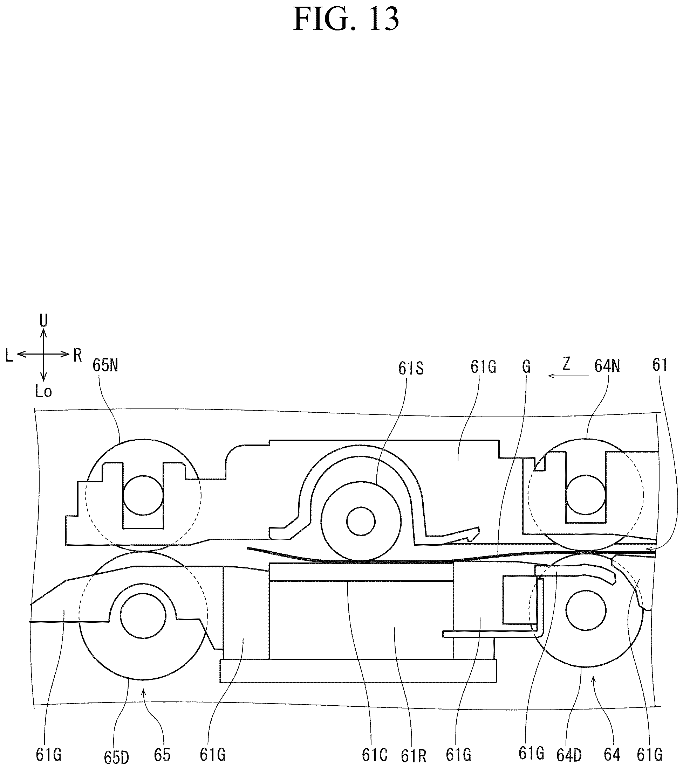

FIGS. 13 to 17 are views showing an action of the conventional document conveying device 120 in which the first contact member 91 is not provided. The document G conveyed from the document feeding mechanism 31 to the first conveying path 61 is corrected in posture by the pair of first conveying rollers 64, and then, fed to the reading section 61R (see FIG. 13). The reading section 61R reads an image from the document G and transmits it to the control unit 2. Since the contact glass 61C and the shading correction roller 61S have small frictional resistance, the document G smoothly passes through a contact region between the contact glass 61C and the shading correction roller 61S. Therefore, the document G hardly warps in a section between the pair of first conveying rollers 64 and the reading section 61R.

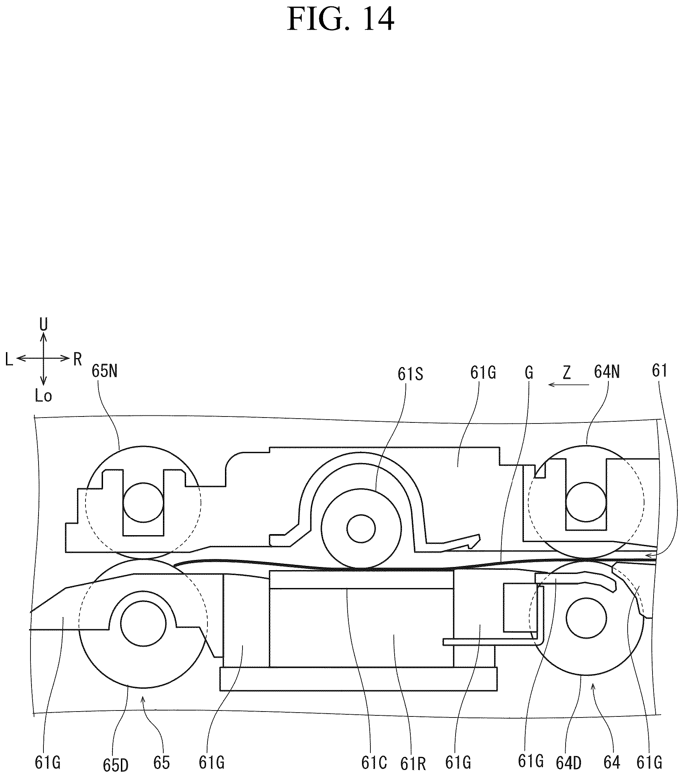

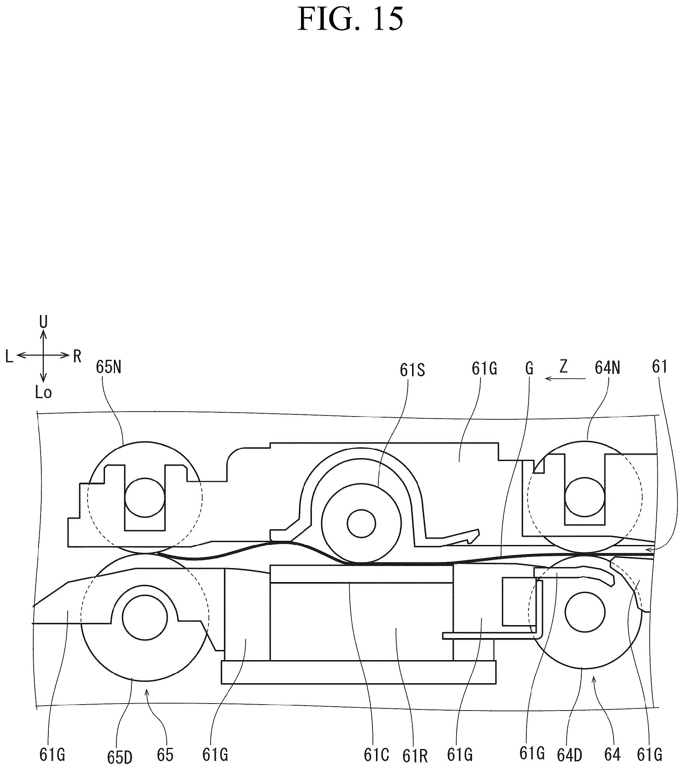

After that, the distal end part of the document G reaches the pair of second conveying rollers 65, but the distal end part of the document G does not always smoothly enter a contact region (a nip region) between the driving roller 65D and the driven roller 65N, and in many cases, the distal end part of the document G contacts the driving roller 65D or the driven roller 65N, so that deflection of the document G occurs in the section between the reading section 61R and the pair of second conveying rollers 65 (See FIGs. 14 and 15).

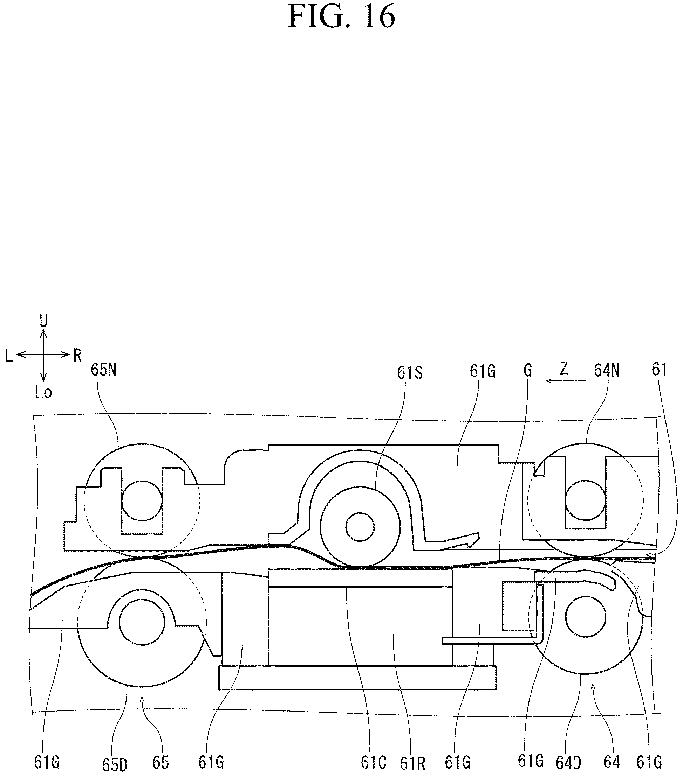

Thereafter, the distal end part of the document G is drawn into the contact region between the driving roller 65D and the driven roller 65N, and the document G is started to be conveyed by the pair of second conveying rollers 65, but since the conveyance by the pair of first conveying rollers 64 is also performed in parallel, the deflection of the document G in the section between the reading section 61R and the pair of second conveying rollers 65 is not eliminated (see FIG. 16). However, since the conveyance of the document G is stable, the image read by the reading section 61R is less disturbed.

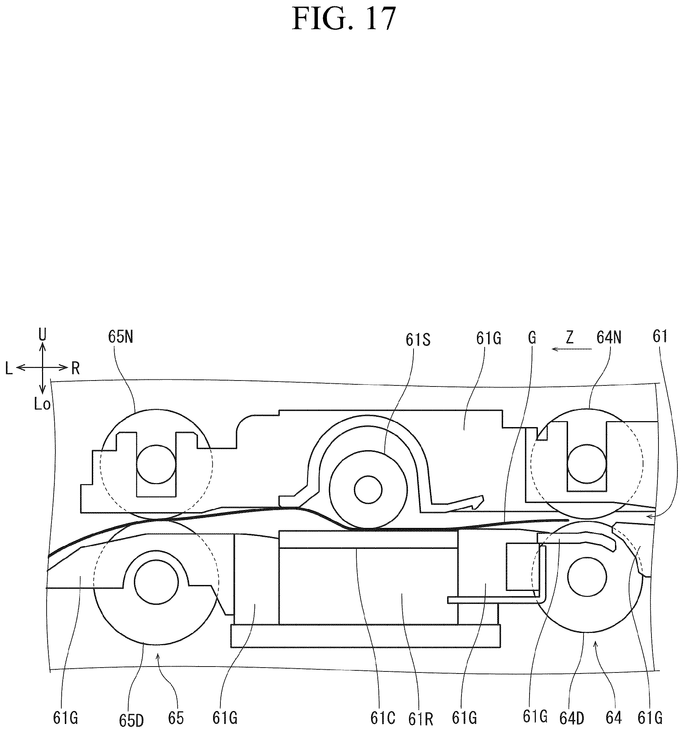

Thereafter, at the moment when a rear end part of the document G passes through the pair of first conveying rollers 64 (see FIG. 17), since restraining force of the pair of first conveying rollers 64 disappears, force for releasing the deflection of the document G in the section between the reading section 61R and the pair of second conveying rollers 65 acts. Due to such force, the document G is slightly pushed back to the upstream side in the conveyance direction Z in the reading section 61R, so that the image read by the reading section 61R is disturbed.

### <Action of Document Conveying Device according to the Embodiment>

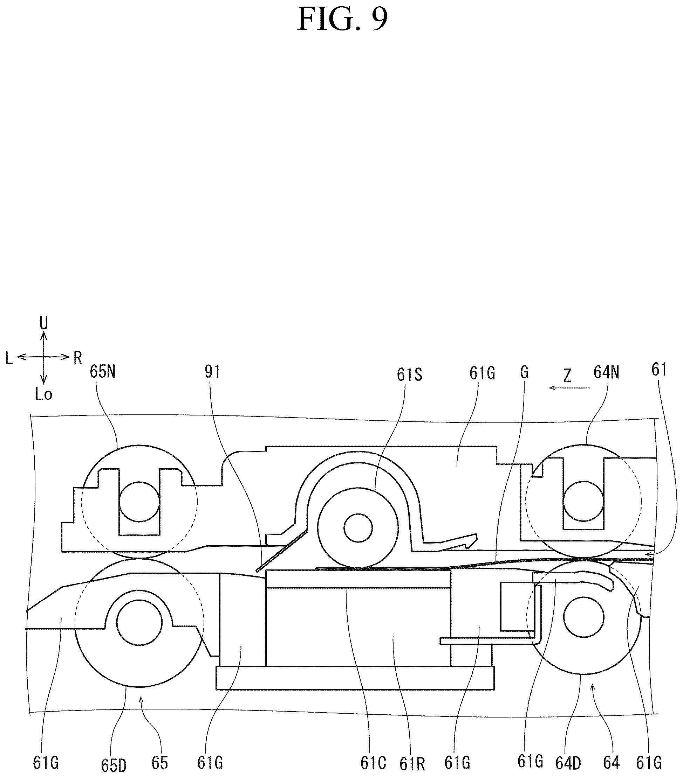

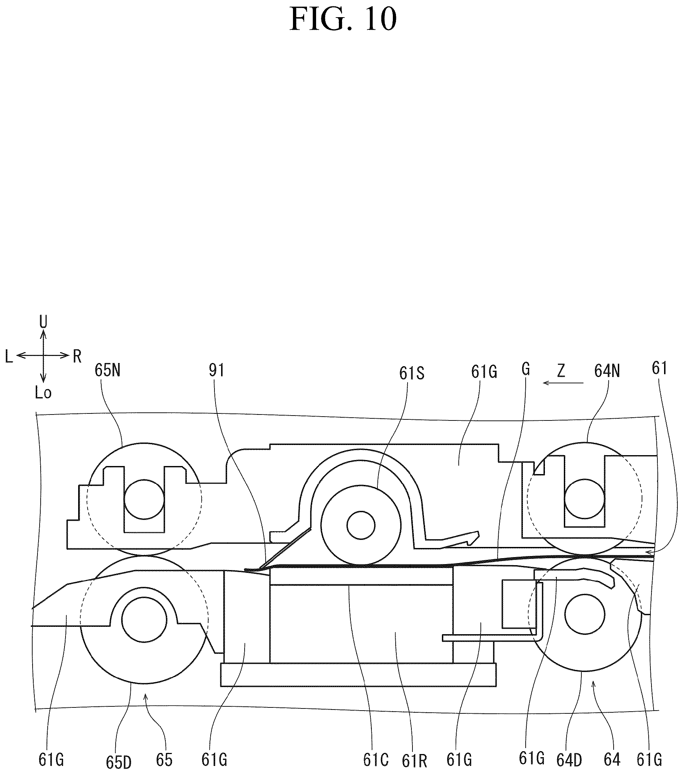

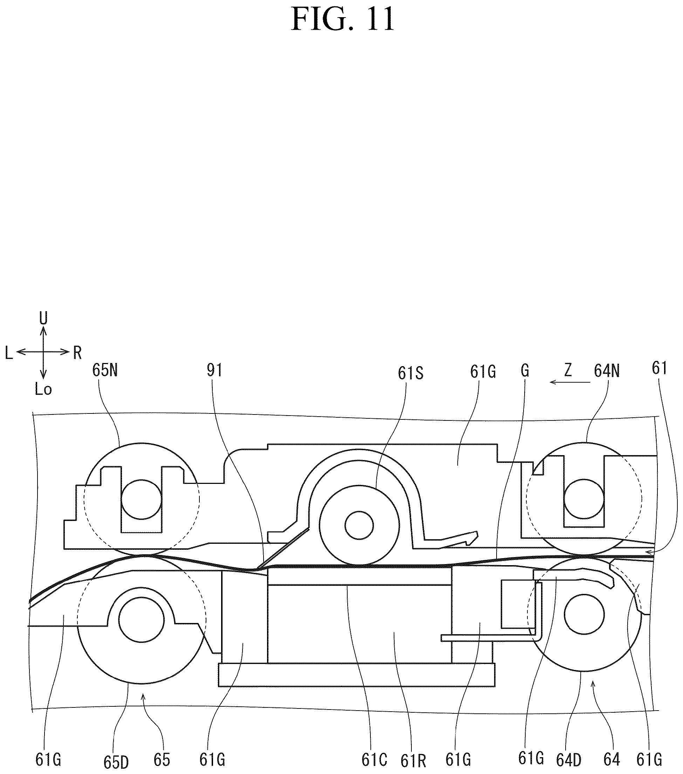

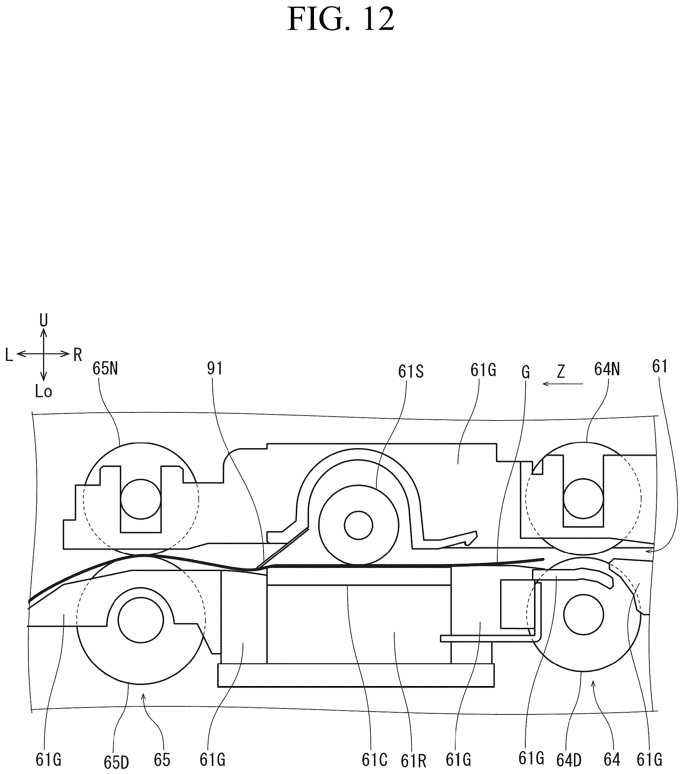

On the other hand, FIGs. 9 to 12 show action of the document conveying device 120 according to the present embodiment. The distal end part of the document G (see FIG. 9) which has passed through the reading section 61R reaches the first contact member 91. Here, as described above, the distal end part 91A of the first contact member 91 is located at the downstream side in the conveyance direction Z of the end of the contact surface of the contact glass 61C at the downstream side in the conveyance direction Z, and is located at the side of the conveying guide 61G below the contact surface of the contact glass 61C. Therefore, the distal end part of the document G burrows under the distal end part 91A of the first contact member 91 (see FIG. 10), and then, moves leftward while contacting the lower conveying guide 61G, and is held and conveyed by the pair of second conveyance rollers 65 (see FIG. 11). During this time, since the deflection of the document G in the section between the reading section 61R and the pair of second conveying rollers 65 is suppressed, the deflection of the document G is released less at the moment when the rear end part of the document G passes the pair of first conveying rollers 64 (see FIG. 12), and as a result, image disturbance is reduced.

The document conveying device 120 according to the present embodiment described above is provided with the pair of conveying guides 61G, the reading section 61R, the pair of first conveying rollers 64, the pair of second conveying rollers 65, and the first contact member 91. The pair of conveying guides 61G face to both surfaces of the document G conveyed in the predetermined conveyance direction Z. The reading section 61R is provided on one of the conveying guides 61G for reading an image from the document G. The pair of first conveying rollers 64 is provided at the upstream side of the reading section 61R in the conveyance direction Z for holding and conveying the document G. The pair of second conveying rollers 65 is provided at the downstream side of the reading section 61R in the conveyance direction Z for holding and conveying the document G. The first contact member 91 is provided on the other conveying guide 61G between the reading section 61R and the pair of second conveying rollers 65 and having the distal end part 91A protruding toward one of the conveying guides 61G in contact with the document G. According to the present embodiment, since the deflection of the document G after passing through the reading section 61R is suppressed by contacting the distal end part 91A of the first contact member 91, the release of the deflection when the rear end part of the document G passes through the pair of first conveying rollers 64 is reduced. Therefore, according to the present embodiment, the behavior of the document G when the rear end part of the document G passes through the pair of first conveying rollers 64 can be stabilized. In other words, in the document reading device 120 provided with the reading section 61R between the pair of first conveying rollers 64 and the pair of second conveying rollers 65, the behavior of the document G when the rear end part of the document G passes through the pair of first conveying rollers 64 at the upstream side can be stabilized.

In the document conveying device 120 according to the present embodiment, the first contact member 91 is a resin film. According to the embodiment, since the resistance to the conveyance of the document G is reduced, the document G can be smoothly conveyed.

In the document conveying device 120 according to the present embodiment, the first contact member 91 is inclined so that the distal end part 91A is positioned at the downstream side of the proximal end part 91B in the conveyance direction Z. According to the present embodiment, since the resistance to the conveyance of the document G is reduced, the document G can be smoothly conveyed.

In the document conveying device 120 according to the present embodiment, the reading section 61R is provided with the contact glass 61C in contact with the document G, the end of the contact surface of the contact glass 61C at the downstream side in the conveyance direction Z protrudes toward the other conveying guide 61G than the one conveying guide 61G, and the distal end part 91A of the first contact member 91 is located farther downstream in the conveyance direction Z than the end of the contact surface of the contact glass 61C at the downstream side in the conveyance direction Z and farther toward the one conveying guide 61G than the contact surface of the contact glass 61C. According to the present embodiment, since the document G can be brought closer to the one conveying guide 61G, the deflection of the document G can be suppressed.

In the document conveying device 120 according to the present embodiment, the gap 91C is provided between the distal end part 91A of the first contact member 91 and the one conveying guide 61G. According to the present embodiment, since the resistance to the conveyance of the document G is reduced, the document G can be smoothly conveyed.

The above-described embodiment may be modified as follows.

### <Second contact member>

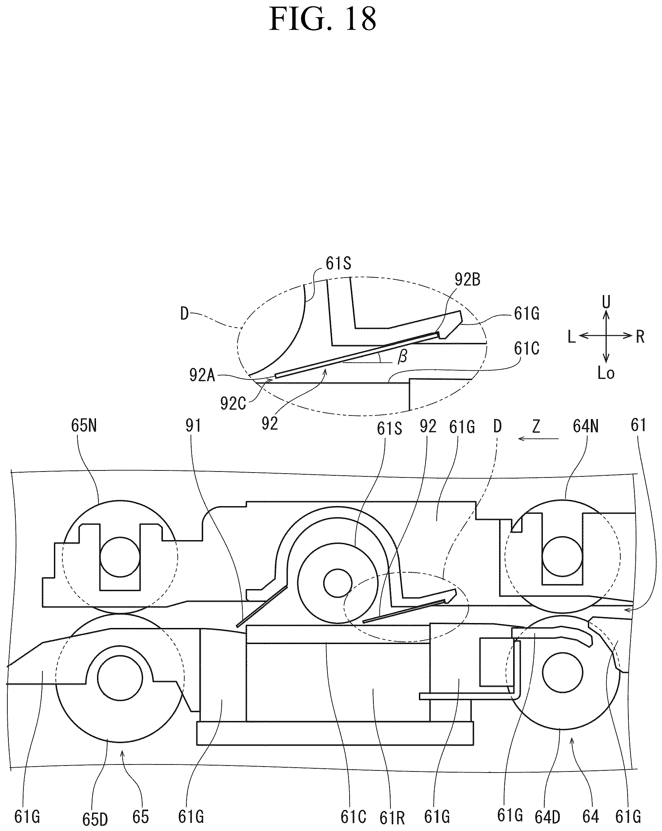

FIG. 18 is a front view showing the first conveying path 61 according to a modified example of the above-described embodiment. The first conveying path 61 is provided with a second contact member 92. The second contact member 92 is provided on the other conveying guide 61G (in this embodiment, the upper conveying guide 61G) between the pair of first conveying rollers 64 and the reading section 61R, and the distal end part 92A protruding toward the one conveying guide 61G (in this embodiment, the lower conveying guide 61G) contacts the document G.

The second contact member 92 is a film made of a resin such as polyester. For example, a thickness of the second contact member 92 is 0.188 mm, and a width in the front and rear directions is 293 mm.

The second contact member 92 is inclined so that the distal end part 92A is positioned at the downstream side of a proximal end part 92B in the conveyance direction Z. In other words, the distal end part 92A is positioned at the lower left side with respect to the proximal end part 92B. The proximal end part 92B is an end, that is joined to the upper conveying guide 61G, of both ends of the second contact member 92. As an example, an inclined β of the second contact member 92 with respect to the horizontal is approximately 15 degrees.

The distal end part 92A faces to the contact surface of the contact glass 61c. Between the distal end part 92A and the contact glass 61c, a gap 92C is provided.

The document conveying device 120 according to the modified example described above is provided with the second contact member 92 which is provided on the other conveying guide 61G between the pair of first conveying rollers 64 and the reading section 61R, and whose distal end part 92A protruding toward the one conveying guide 61G contacts the document G. According to the modified example, since paper dust adhering to the document G is removed, deterioration in image quality due to the paper dust can be suppressed.

In the document conveying device 120 according to the modified example, the second contact member 92 is a resin film. According to the modified example, since the resistance to the conveyance of the document G is reduced, the document G can be smoothly conveyed.

In the document conveying device 120 according to the modified example, the second contact member 92 is inclined so that the distal end part 92A is positioned at the downstream side of the proximal end part 92B in the conveyance direction Z. According to the modified example, since the resistance to the conveyance of the document G is reduced, the document G can be smoothly conveyed.

In the document conveying device 120 according to the modified example, the gap 92C is provided between the distal end part 92A and the contact glass 61c. According to the modified example, since the resistance to the conveyance of the document G is reduced, the document G can be smoothly conveyed.

## Claims

1. A document conveying device (120) comprising:
a pair of conveying guides (61G) facing to both surfaces of a document (G) conveyed in a predetermined conveyance direction (Z);
a reading section (61R) being provided on one of the conveying guides (61G) for reading an image from the document (G);
a pair of first conveying rollers (64) being provided at an upstream side of the reading section (61R) in the conveyance direction (Z) for holding and conveying the document (G);
a pair of second conveying rollers (65) being provided at a downstream side of the reading section (61R) in the conveyance direction (Z) for holding and conveying the document (G); and
a first contact member (91) being provided on the other of the conveying guides (61G) between the reading section (61R) and the pair of second conveying rollers (65) and having a distal end part (91A) protruding toward the one of the conveying guides (61G) in contact with the document (G).

2. The document conveying device (120) according to claim 1, wherein
the first contact member (91) is a resin film.

3. The document conveying device (120) according to claim 1 or 2, wherein
the first contact member (91) is inclined so that the distal end part (91A) is positioned at the downstream side of a proximal end part (91B) in the conveyance direction (Z).

4. The document conveying device (120) according to claim 3, wherein
the reading section (61R) is provided with a contact glass (61C) in contact with the document (G),
an end of a contact surface of the contact glass (61C) at the downstream side in the conveyance direction (Z) protrudes toward the other of the conveying guides (61G) than the one of the conveying guides (61G), and
the distal end part (91A) of the first contact member (91) is located farther downstream in the conveyance direction (Z) than the end of the contact surface of the contact glass (61C) at the downstream side in the conveyance direction (Z) and farther toward the one of the conveying guides (61G) than the contact surface of the contact glass (61C).

5. The document conveying device (120) according to claim 4, wherein
a gap (91C) is provided between the distal end part (91A) of the first contact member (91) and the one of the conveying guides (61G).

6. The document conveying device (120) according to claim 4 comprising:
a shading correction roller (61S) being provided on the other of the conveying guides (61G) and being in contact with the contact glass (61C),
wherein
the first contact member (91) is provided at the downstream side of the shading correction roller (61S) in the conveyance direction (Z).

7. The document conveying device (120) according to claim 1 comprising:
a second contact member (92) being provided on the other of the conveying guides (61G) between the pair of first conveying rollers (64) and the reading section (61R), and whose distal end part (92A) protruding toward the one of the conveying guides (61G) contacts the document (G).

8. The document conveying device (120) according to claim 7, wherein
the second contact member (92) is a resin film.

9. The document conveying device (120) according to claim 7 or 8, wherein
the second contact member (92) is inclined so that the distal end part (92A) is positioned at the downstream side of a proximal end part (92B) in the conveyance direction (Z).

10. The document conveying device (120) according to claim 9, wherein
the reading section (61R) is provided with a contact glass (61C) in contact with the document (G),
a gap (92C) is provided between the distal end part (92A) of the second contact member (92) and a contact surface of the contact glass (61C).

11. The document conveying device (120) according to claim 10 comprising:
a shading correction roller (61S) being provided on the other of the conveying guides (61G) and being in contact with the contact glass (61C),
wherein
the second contact member (92) is provided at the upstream side of the shading correction roller (61S) in the conveyance direction (Z).
